# EUROPEAN PATENT APPLICATION

(11) **EP 4 687 285 A1**
(43) Date of publication of application: **04.02.2026**
(21) Application number: 24212571.4
(22) Date of filing: 13.11.2024
(51) Int. Cl.: H02S 20/20, F24S 25/10, F21W 131/103

(54) **SOLAR HOLDING PANEL AND SOLAR STREET LAMP**

(30) Priority: 01.08.2024 CN 202421853030 U
(71) Applicant: Dongguan Thailight Semiconductor Lighting Co., Ltd, Dongguan, Guangdong 523000 (CN)
(72) Inventor: ZHOU, Wenbo, Dongguan 523000 (CN)
(74) Representative: Metida

(57) **Abstract**

The present application discloses a solar holding panel, including: at least one solar sleeve that sleeved on a lamppost core pole; at least two connecting units that provided at an upper end and a lower end of the one solar sleeve respectively to fix the solar sleeve on the lamppost core pole.

## Description

### CROSS-REFERENCE TO RELATED APPLICATION

This application claims priority to Chinese Patent Application No. CN202421853030.2 filed on August 1, 2024, the entire content of which is hereby incorporated by reference.

### FIELD OF TECHNOLOGY

The present application relates to the technical field of solar energy application technology, and inparticular to a solar holding panel.

### BACKGROUND

With an increasing demand for energy in today's society, development and utilization of clean energy are particularly critical. As one of clean energy, solar energy is converted into electricity for utilization through solar equipment.

Present commercially available solar equipment especially solar street lamp usually processes a photoelectric conversion through a solar panel provided on a lamppost core pole. The solar panel is provided with a certain inclination angle towards a main lighting direction, in order to make a light direction as perpendicular as possible to a plane where the solar panel is located thus achieving a maximum conversion efficiency. According to a latitude of a most suitable geographical location for solar power generation, the solar panel generally presents a 0-30° angle relative to the horizontal plane. Even at a place with relatively higher latitude where it is necessary to increase an inclination angle of the solar panel, generally the inclination angle will not exceed 50°. However, with this setting of angle, a surface of the solar panel is very easy to have a dust deposition. Also, based on a structure of the solar panel itself, when individual positions are blocked by dust and cannot generate electricity, a whole connected area will not be able to generate electricity, greatly affected by the dust.

In order to solve such this problem, the prior art clean through adding additional cleaning devices or arranging robots as well as humans. However, either cleaning method greatly increases a cost, also, a frequently cleaning is easy to damage a surface of the solar panel and lower an efficiency of electricity generation.

### SUMMARY

According to an aspect of this disclosure, a solar holding panel is disclosed.

A solar holding panel includes at least one solar sleeve sleeved on a lamppost core pole of a street lamp; at least two connecting units, wherein the two connecting units are provided on an upper end and a lower end of the solar sleeve to fix the solar sleeve on the lamppost core pole.

According to another aspect of this disclosure, a solar street lamp is disclosed.

A solar street lamp includes a lamppost core pole, a lamp, a solar holding panel and a base, wherein, the lamp is installed on the lamppost core pole, the solar holding panel is sleeved on the lamppost core pole, the lamppost core pole is fixed through the base.

### BRIEF DESCRIPTION

FIG. 1 is a schematic structure diagram of a solar street lamp of the present application;
FIG.2 is a schematic structure diagram of a solar holding panel of the present application installed on a lamppost core pole of the solar street lamp in FIG. 1;
FIG.3 is a schematic structure diagram of a solar panel of the solar holding panel in FIG. 2;
FIG.4 is a schematic structure diagram of a supporting element of the solar holding panel in FIG. 2;
FIG.5 is an amplified structural schematic diagram of one end of the supporting element in FIG. 4;
FIG.6 is a schematic structure diagram of a first clamping element of the supporting element in FIG. 4;
FIG.7 is a schematic structure diagram of a second clamping element of the supporting element in FIG. 4;
FIG.8 is a schematic structure diagram of an outer side surface of a connector of the solar holding panel in FIG. 2;
FIG.9 is a schematic structure diagram of an inner side surface of the connector in FIG.8;
FIG.10 is an overall schematic structure diagram of a first sealing strip of the solar holding panel in FIG. 2;
FIG. 11 is a schematic structure diagram with an amplified end portion of the first sealing strip in FIG.10;
FIG.12 is a schematic structure diagram of an end of the first sealing strip in FIG.10;
FIG.13 is a schematic cross-sectional diagram of the first sealing strip in FIG.10;
FIG.14 is an overall schematic structure diagram of a second sealing strip of the solar holding panel in FIG. 2;
FIG.15 a schematic structure diagram with an amplified end portion of the second sealing strip in FIG.14;
FIG.16 is a schematic structure diagram of an end of the second sealing strip in FIG.14;
FIG.17 is a schematic cross-sectional diagram of the second sealing strip in FIG.14;
FIG.18 is a schematic structure diagram of a solar sleeve of the solar holding panel in FIG.2 after assembly;
FIG.19 is a schematic structure diagram of one end of the solar sleeve in FIG.18;
FIG.20 is a schematic structure diagram of the solar holding panel as shown in FIG. 2 where two solar panels, two supporting elements, the first sealing strip and the second sealing strip are bonded;
FIG.21 is a schematic structure diagram of a connecting unit of the solar holding panel in FIG.2;
FIG.22 is a top view of the connecting unit in FIG.21; and
FIG.23 is a schematic structure diagram of a positioning unit of the solar holding panel in FIG.2.

### DETAILED DESCRIPTION

The present inventor of the present application carefully analyzed the prior art of solar street lamps. To avoid being blocked by shadows of surrounding buildings and to be set as perpendicularly to sunlight as possible for a maximum power generation efficiency, a solar panel is usually set at an upper end of a street lamp and a gravitational component of the solar panel perpendicular to a lamppost core pole.This requires high support strength of the lamppost core pole, and area of the solar panel cannot be too large, otherwise it would not be supported. In order to solve a problem of dust deposition, the present application attempts to make the solar panel into a hollow sleeve that is sleeved around the lamppost core pole. Because the solar panel is provided vertically with respect to a ground, a gravitational component perpendicular to the lamppost core pole is very small, eliminating a need of support considerations. Therefore, although a vertical arrangement of the solar panel makes it is not directly perpendicular to the sunlight and thus reducing an efficiency of power generation, it is still feasible to increase the area of the solar panel to maintain an adequate power supply after the reduction of the efficiency of power generation.

However, when sleeving the solar panel on the lamppost core pole, other assemblies on the lamppost core pole of the street lamp must be disassembled during installation and disassembly, leading to a problem of slow installation due to a complex installation. Therefore, the present application further provides a plurality of connecting units to achieve a rapid installation of the solar panel onto the lamppost core pole.

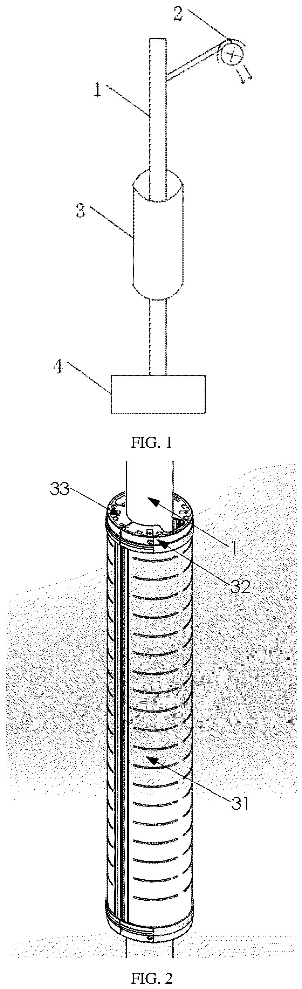

Please refer to FIG.1. A clean-free and rapid-installation solar street lamp of the present application includes the lamppost core pole 1, a lamp 2, the solar holding panel 3 and a base 4. The lamppost core pole 1 is fixed on the ground through the base 4. The solar holding panel 3 is sleeved on the lamppost core pole 1 and electrically connected to the lamp 2 provided on an upper end of the lamppost core pole 1.

Wherein, please refer to FIGS.2-23. The solar holding panel 3 includes a solar sleeve 31, a connecting unit 32 and a positioning unit 33. The solar sleeve 31 is spliced and provided on the lamppost core pole 1 through the connecting unit 32. The connecting unit 32 is fixed on the lamppost core pole 1 through the positioning unit 33.

Particularly, please refer to FIG.2. The solar sleeve 31 is a hollow cylinder, and is formed by a splicing of at least two side panels in curved shape. In one embodiment, the solar sleeve 31 is formed by a combination of a first side panel and a second side panel in semi-circular arc shape. The first side panel and the second side panel are docked with each other, then sleeved and installed perpendicularly to the ground on the lamppost core pole 1. This can be applied to different core posts, such as 4 inches round pole, 5 inches round pole and 4 inches square pole.

In one embodiment, the first side panel and the second side panel have the same structure and are both provided with a solar panel to have a power generation function. Wherein, take the first side panel for an example, it includes one solar panel 311, one supporting element 312, two connectors 313, one first sealing strip 314 and one second sealing strip 315. Upper ends of the solar panel 311 and the supporting element 312 are attached to and pressed against each other through one connector of the two connectors 313 with the same size. Lower ends of the solar panel 311 and the supporting element 312 are attached to and pressed against each other through another connector of the two connectors 313 with the same size. Edges of both sides of the solar panel 311 and the supporting element 312 are attached to and pressed against each other through the first sealing strip 314 and the second sealing strip 315.

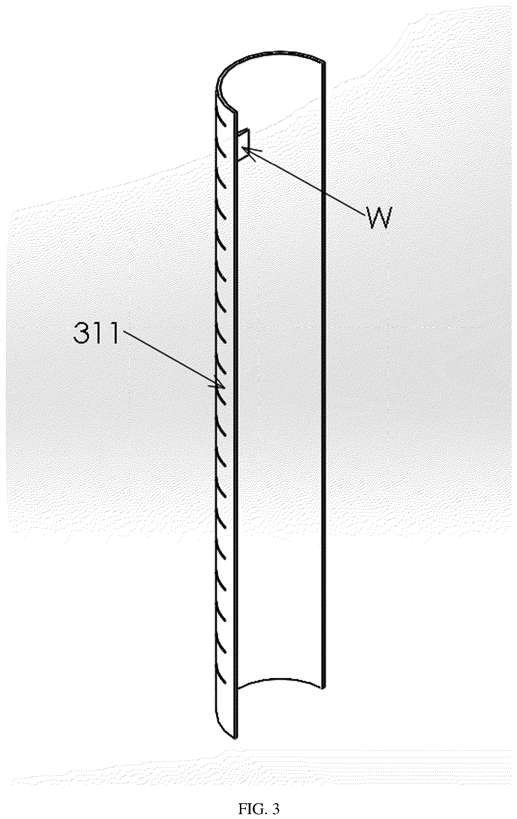

Please refer to FIG.3. The solar panel 311 has a curved panel structure with a smooth surface. Wherein, an outer surface of the solar panel 311 is made of semiconductor material and can convert solar energy into electrical energy, an inner surface of the solar panel 311 is made of conducting metal and can be connected with wires to transmit electrical energy to outside. A storage battery W connected to the solar panel 311 through a wire may be provided on the solar panel 311 to store electrical energy generated by the solar panel 311.

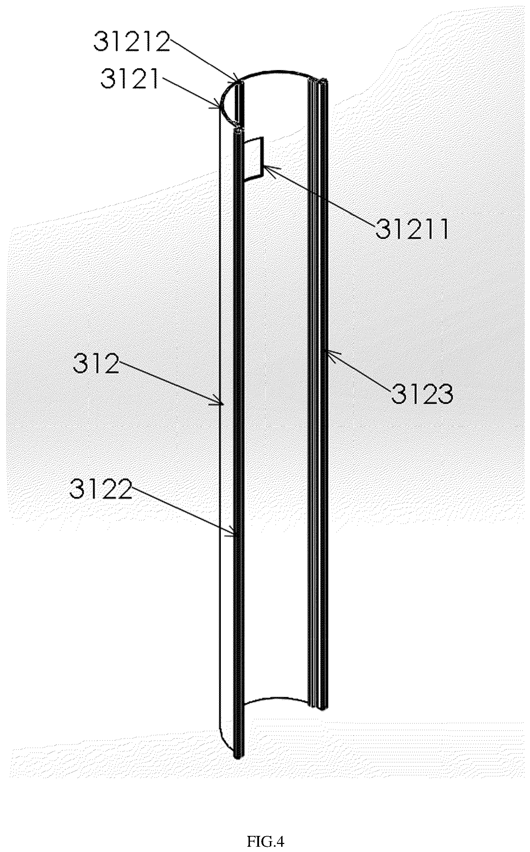

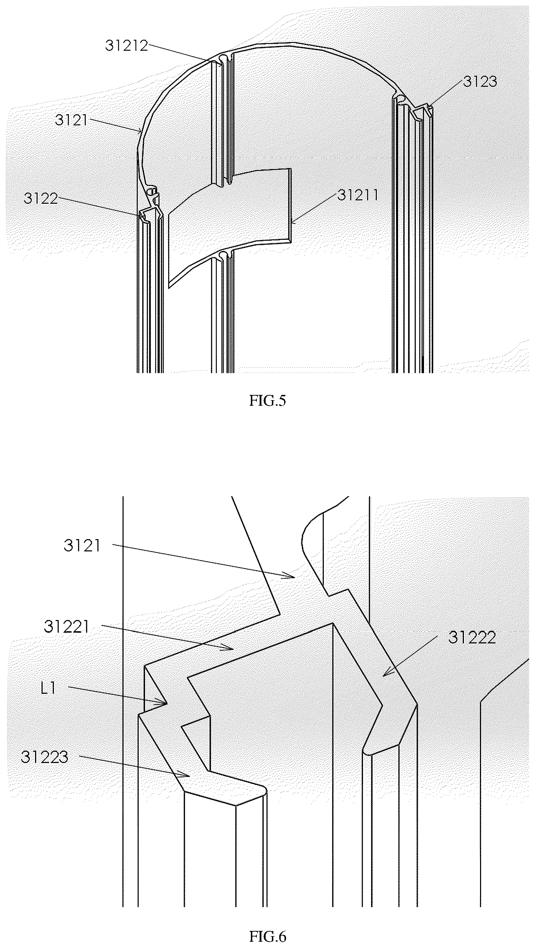

Please refer to FIG.4 and FIG.5. The supporting element 312 includes a supporting panel 3121, a first clamping element 3122 and a second clamping element 3123. The first clamping element 3122 and the second clamping element 3123 are connected to each other through the supporting panel 3121.

The supporting panel 3121 has a curved panel structure, and its size is as the same as the solar panel 311. The supporting panel 3121 may be made of metal such as aluminum to provide rigid support for the solar panel. Also, the supporting panel 3121 may be made of insulating material, in this case, an insulating layer is coated on a surface of the supporting panel 3121 attached to the solar panel 311 to prevent electricity leakage. A wire window 31211 is provided on a position near to an end of a side of the supporting panel 3121. A shape of the wire window 31211 may be rectangle etc. and matched with a shape of the storage battery W to receive the storage battery W after an attachment between the solar panel 311 and the supporting element 312 and to provide a window for the storage battery W such that the storage battery W may be connected to an external appliance such as a LED lamp of the street lamp through wires, providing electrical energy to the outside and achieving photoelectric conversion and utilization. A plurality of wire grooves 31212 protruding towards an inner curved side are provided on the supporting panel 3121. In one embodiment, the number of wire grooves of the plurality of wire grooves 31212 is three, one wire groove of three wire grooves 31212 is provided on a center of the supporting panel 3121 and passes through the wire window 31211, and divided into two segments by the wire window 31211 as an inlet and an outlet wire channel of the storage battery W. The other two wire grooves of the three wire grooves 31212 are provided on both sides of the supporting panel 3121 as wire channels for other wires.

Please refer to FIG.6. The first clamping element 3122 includes a first clamp connecting edge 31221, a first clamp inner edge 31222 and a first clamp outer edge 31223. An end position of the first clamp connecting edge 31221 near to one end of an inner curved side of the supporting panel 3121 is perpendicularly and fixedly connected to an edge of one side of the supporting panel 3121. The first clamp inner edge 31222 is perpendicularly connected to the end position of the first clamp connecting edge 31221 near to the end of the inner curved side of the supporting panel 3121, and slightly protrudes from the supporting panel 3121 along a direction of the inner curved side. The first clamp outer edge 31223 is perpendicularly connected to an end position of the first clamp connecting edge 31221 near to an end of an outer curved side. A first clamp bending angle L1 that concaved along the direction of the inner curved side is provided on a connection position of the first clamp outer edge 31223 and the first clamp connecting edge 31221. The first clamp bending angle L1 may be a right angle, an internal angle direction of which faces an outer curved side of the supporting panel 3121. Materials of the first clamp inner edge 31222 and the first clamp outer edge 31223 are not limited, and material of the first clamp connecting edge 31221 is only needed to be ensured that there is no electricity leakage to the solar panel 311.

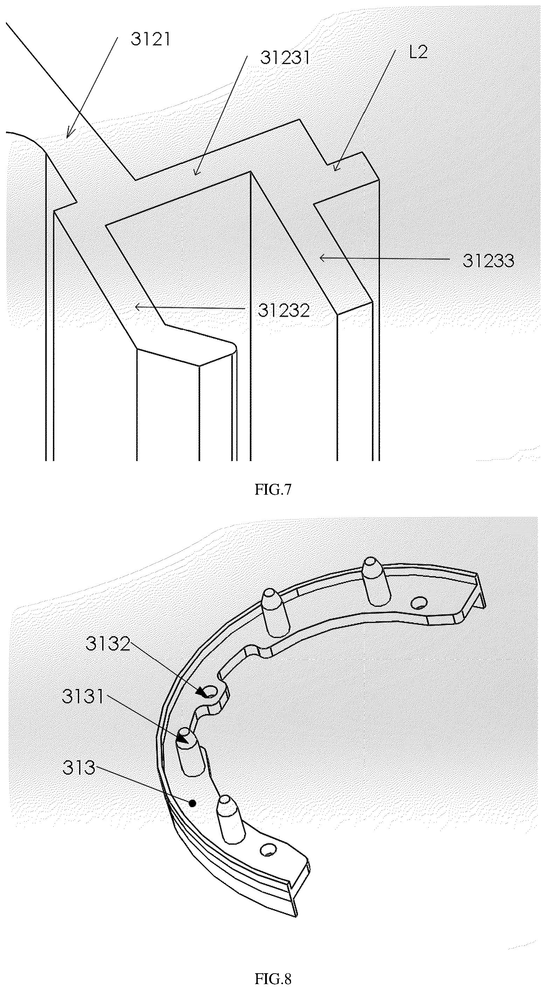

Please refer to FIG.7. The second clamping element 3123 includes a second clamp connecting edge 31231, a second clamp inner edge 31232 and a second clamp outer edge 31233. An end position of the second clamp connecting edge 31231 near to one end of the inner curved side of the supporting panel 3121 is perpendicularly and fixedly connected to the edge of the other side of the supporting panel 3121. The second clamp inner edge 31232 is perpendicularly connected to the end position of the second clamp connecting edge 31231 near to an end of the inner curved side of the supporting panel 3121, and slightly protrudes from the supporting panel 3121 along the direction of the inner curved side. The second clamp outer edge 31233 is perpendicularly connected to an end position of the second clamp connecting edge 31231 near to an end of an outer curved side. An additionally protruding second clamp bending angle L2 is provided on a connection position of the second clamp outer edge 31233 and the second clamp connecting edge 31231. The second clamp bending angle L2 may be a right angle, and an internal angle direction of second clamp bending anglefaces the outer curved side of the supporting panel 3121. Materials of the second clamp inner edge 31232 and the second clamp outer edge 31233 are not limited, and material of the second clamp connecting edge 31231 is only needed to be ensured that there is no electricity leakage to the solar panel 311.

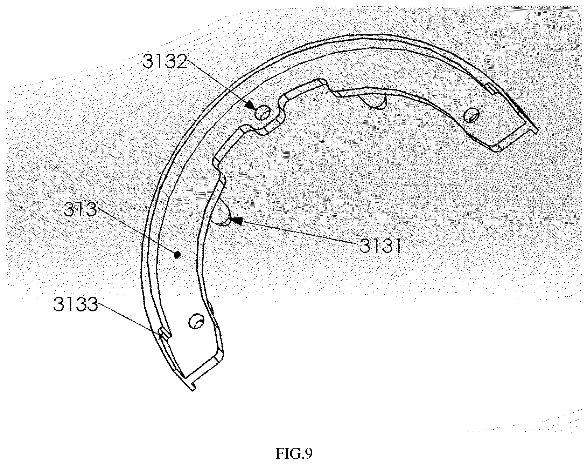

Please refer to FIG.8 and FIG.9. The connector 313 includes two connecting pieces with the same structure. Each connecting piece of the two connecting pieces includes a base panel and a side panel. The base panel is a flat panel. A plurality of posts 3131 perpendicular to the base panel are protrudingly provided on the base panel. In this embodiment, the number of posts of the plurality of posts 3131 is four, with two posts provided on each side. A plurality of wire holes 3132 are also provided on the base panel for wires to pass through. Particularly, the number of wire holes of the plurality of wire holes 3132 corresponds to the number of wire grooves of the plurality of the wire grooves 31212 of the supporting element 312. The side panel has a bending curved structure, and a size of the side panel is as same as that of the base panel. An inner side of the side panel is perpendicularly connected to the base panel. Thicknesses of both ends of the side panel is thinner than that of a middle part of side panel, forming a locking tooth slot 3133.

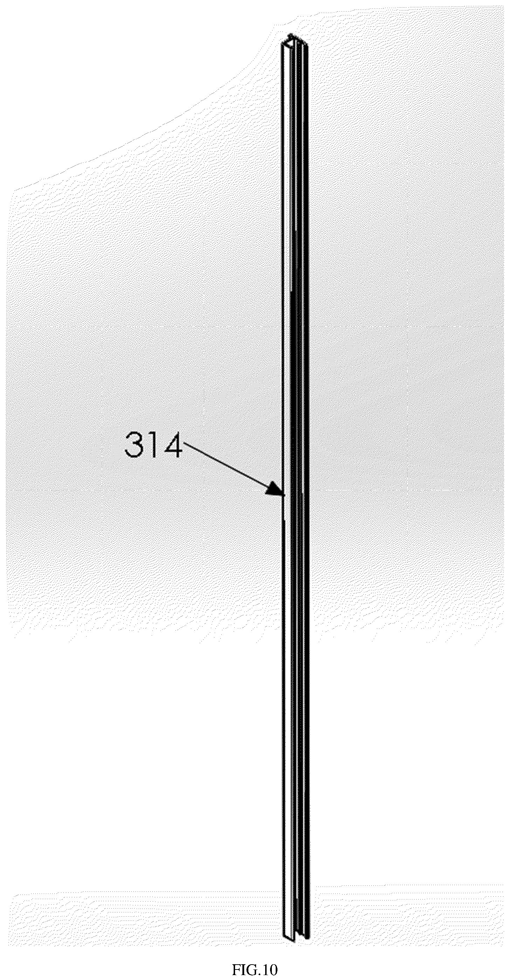

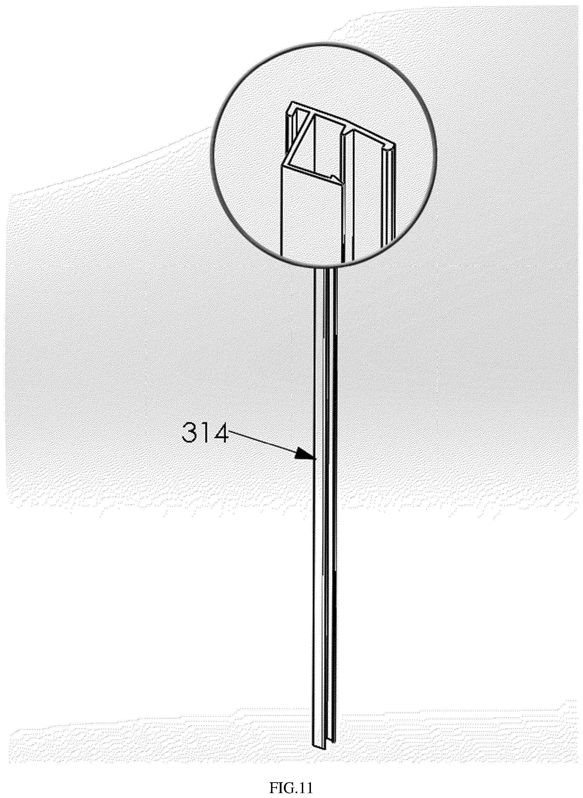

Please refer to FIG.10 and FIG.11. An overall of the first sealing strip 314 has a long strip structure. A special structure provided inside may be observed through amplifying an end of the first sealing strip 314.

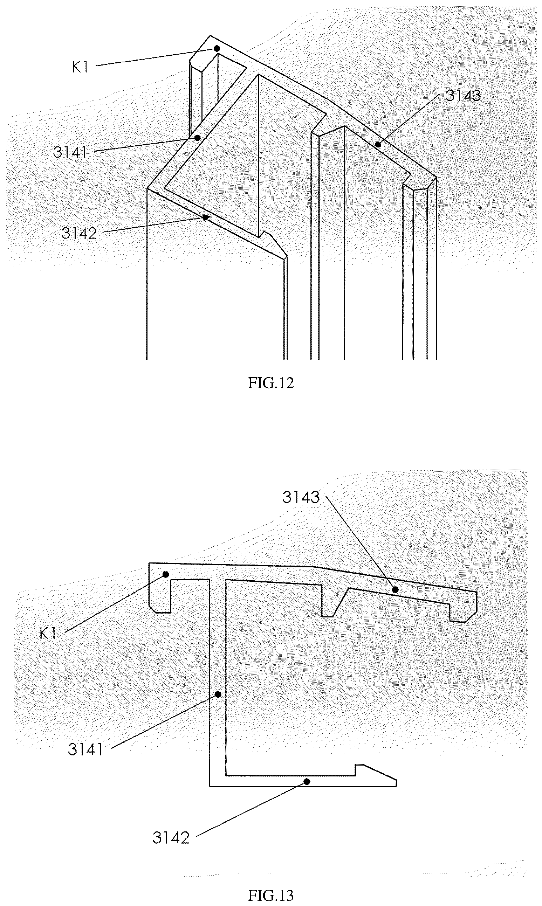

Particularly, please refer to FIG.12 and FIG.13. The first sealing strip 314 includes a first sealing connecting edge 3141, a first sealing inner edge 3142 and a first sealing outer edge 3143.

The first sealing connecting edge 3141 is a smooth straight edge. The first sealing inner edge 3142 is a straight edge with a locking tooth, an end of one side of the first sealing inner edge 3142 is perpendicularly connected to an end of one side of the first sealing connecting edge 3141, an end of the other side of the first sealing inner edge 3142 is provided with a locking tooth. The first sealing outer edge 3143 is a small angle bending edge, an end of one side of the first sealing outer edge 3143 is perpendicularly connected to an end of the other side of the first sealing connecting edge 3141, an end of the other side of first sealing outer edge 3143 is provided with a locking tooth. A bend with a small angle is provided on a middle portion of the first sealing outer edge 3143, and a locking tooth is also provided on the bend. A first sealing bending angle K1 protruding along an opposite direction of the first sealing outer edge 3143 is provided on a connection end of the first sealing connecting edge 3141 and the first sealing outer edge 3143. The first sealing bending angle K1 may be a right angle, an internal angle direction of which faces the first sealing inner edge 3142. In this way, during actually installing, the locking tooth on the end of the first sealing inner edge 3142 is clamped with the first clamp inner edge 31222 of the first clamping element 3122, the locking tooth on the bend of the first sealing outer edge 3143 is clamped on an edge of the first clamp bending angle L1, the first clamp outer edge 31223 of the first clamping element 3122 is clamped through a supporting of the first clamp outer edge 31223 itself, and the locking tooth on the end of the first sealing outer edge 3143 is clamped with the connector 313 in the locking tooth slot 3133 of the connector 313. Specifically, a length of the first sealing outer edge 3143 is longer than that of the first sealing inner edge 3142.

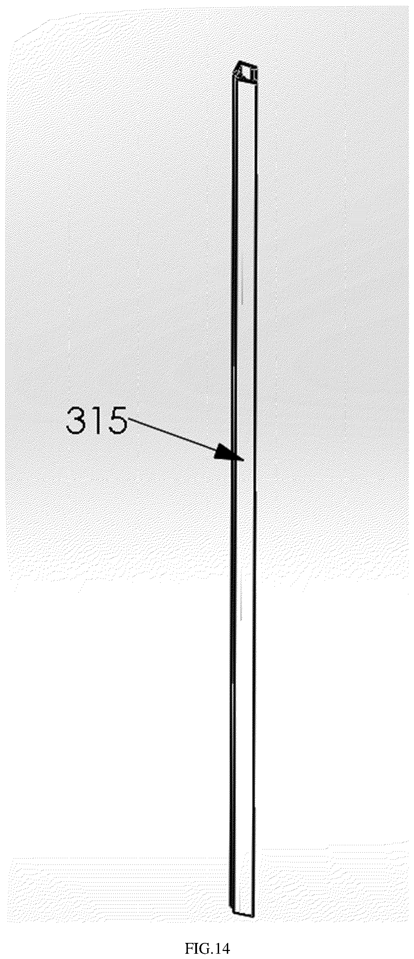

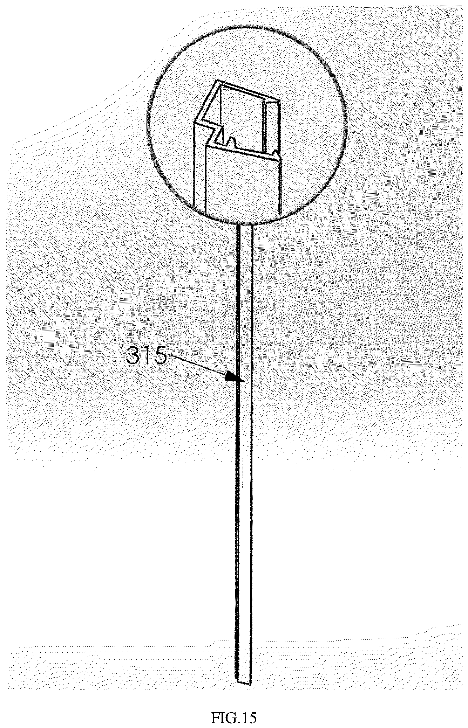

Please refer to FIG.14 and FIG.15. An overall of the second sealing strip 315 has a long strip structure. A special structure provided inside may be observed through amplifying an end of the second sealing strip 315.

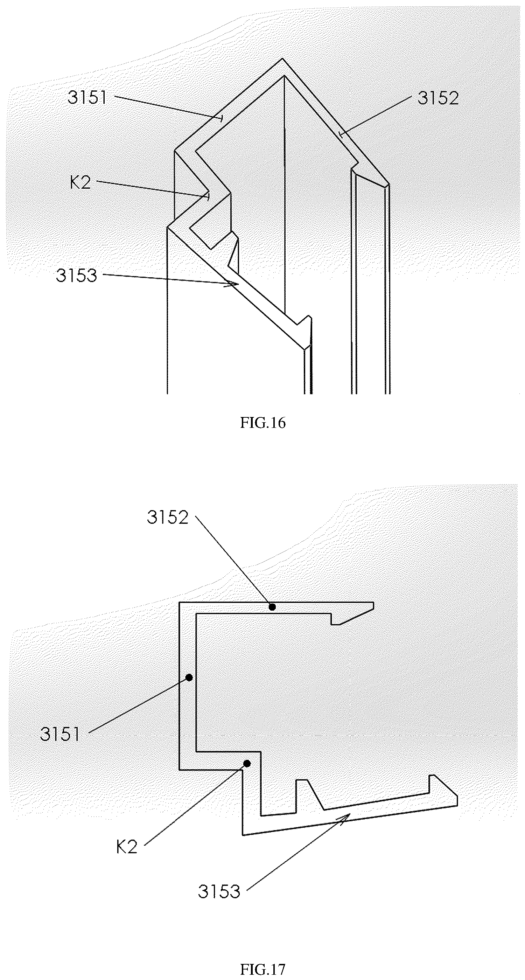

Particularly, please refer to FIG.16 and FIG.17. The second sealing strip 315 includes a second sealing connecting edge 3151, a second sealing inner edge 3152 and a second sealing outer edge 3153.

The second sealing connecting edge 3151 is a smooth straight edge. The second sealing inner edge 3152 is a straight edge with a locking tooth, an end of one side of the second sealing inner edge 3152 is perpendicularly connected to an end of one side of the second sealing connecting edge 3151, an end of the other side of the second sealing inner edge 3152 is provided with the locking tooth. The second sealing outer edge 3153 is a small angle bending edge, an end of one side of the second sealing outer edge 3153 is perpendicularly connected to an end of the other side of the second sealing connecting edge 3151, an end of the other side is provided with a locking tooth. A bend with a small angle is provided on a middle portion of the second sealing outer edge 3153, and a locking tooth is also provided on the bend. A second sealing bending angle K2 concaving along a direction of the second sealing outer edge 3153 is provided on a connection end of the second sealing connecting edge 3151 and the second sealing outer edge 3153. The second sealing bending angle K2 may be a right angle, an internal angle direction of which is away from the second inner edge 3152. In this way, during actually installing, the locking tooth on the end of the second sealing inner edge 3152 is clamped with the second clamp inner edge 31232 of the second clamping element 3123, the locking tooth on the bend of the second sealing outer edge 3153 is clamped on an protruding edge of the second clamp bending angle L2, the second clamp outer edge 31233 of the second clamping element 3123 is clamped through a supporting of the second clamp bending angle L2, and the locking tooth on the end of the second sealing outer edge 3153 is clamped with the connector 313 in the locking tooth slot 3133 of the connector 313. Specifically, a length of the second sealing outer edge 3153 is longer than that of the second sealing inner edge 3152.

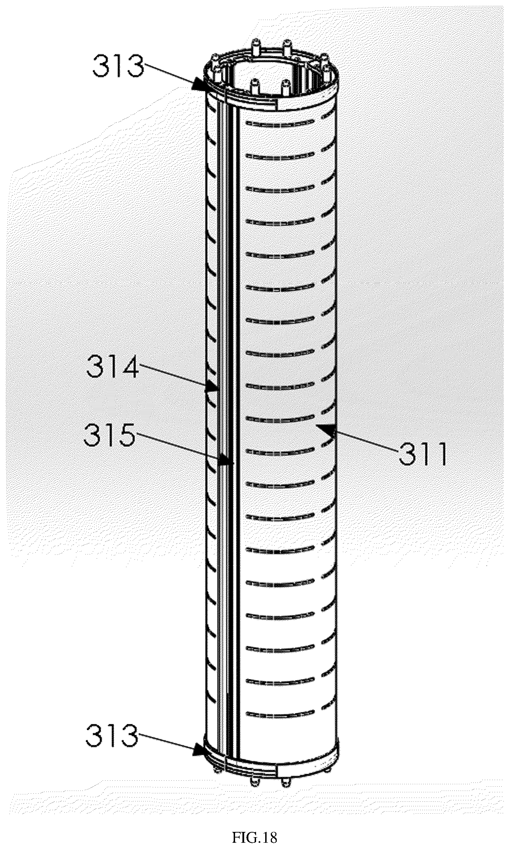

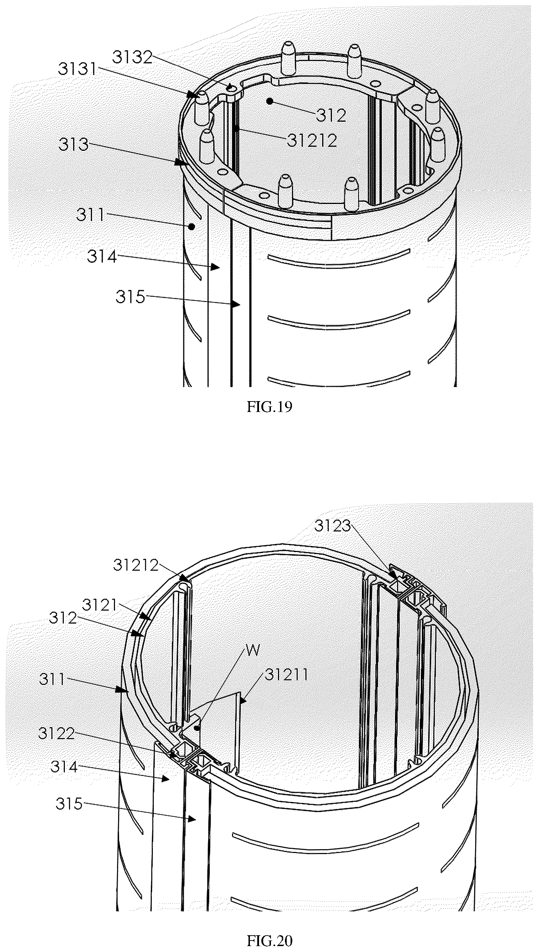

Please refer to FIG.18 and FIG.19. When assembling the first side panel and the second side panel of the solar sleeve 31, a docking process thereof is as follows: one solar panel 311 is attached to an outer side of one supporting element 312. At this time, one connecting piece of one connector 313 is jointed at an upper end of the solar panel 311 and the supporting element 312, and one connecting piece of another connector 313 is jointed at a lower end of the solar panel 311 and the supporting element 312. Then, one first sealing strip 314 and one second sealing strip 315 are inserted into two sides of the solar panel 311 and the supporting element 312 respectively, thereby assembling the first side panel. The second panel is assembled in the same way. Finally, side edges of the first side panel and the second side panel are docked and buckled with each other. It is envisioned that in a practical application work, an installer may complete an installation of the first side panel and the second side panel of the solar sleeve 31 in advance in an off-road environment. When installing the solar holding panel 3 on the lamppost core pole 1, the first side panel and the second side panel may be used directly, which greatly saving installation time in a road environment.

Please refer to FIG.20. When assembling the first side panel and the second side panel of the solar sleeve 31, take one of them for an example, the first sealing inner edge 3142 and the first sealing outer edge 3143 of the first sealing strip 314 are pressed against and attached to one side of the solar panel 311 and the supporting element 312, and the second sealing inner edge 3152 and the second sealing outer edge 3153 of the second sealing strip 315 are pressed against and attached to another side of the solar panel 311 and the supporting element 312. When the first side panel and the second side panel are docked with each other, a gap exists between edges of two supporting elements 312. The first sealing connecting edge 3141 of the first sealing strip 314 and the second sealing connecting edge 3151 of the second sealing strip 315 pass through the gap in parallel. That is, the gap is exactly a gap between the first sealing connecting edge 3141 and the second sealing connecting edge 3151. The length of the first sealing outer edge 3143 of the first sealing strip 314 is longer than that of the second sealing outer edge 3153 of the second sealing strip 315, thus a position of a gap formed between the first sealing outer edge 3143 and the second sealing outer edge 3153 is different with a position of the gap formed between the first sealing connecting edge 3141 and the second sealing connecting edge 3151 and thus forming an offset. Therefore, it is difficult for external dust and rain etc. to enter an interior and achieving a sealing to the gap between the two supporting elements 312.

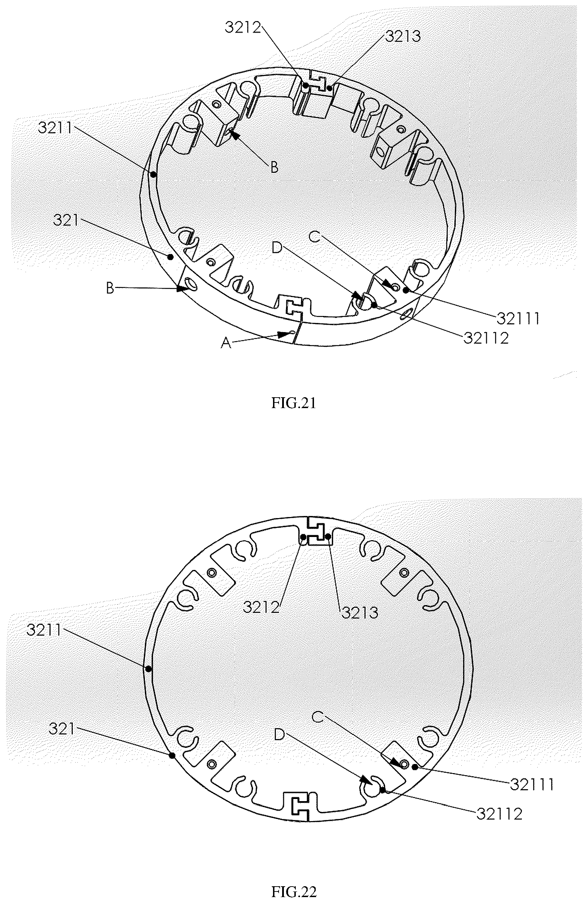

Please refer to FIG.21 and FIG.22. The connecting unit 32 includes two docking pieces 321 in curved shape. Each docking piece of the two docking pieces 321 includes a receiving panel 3211, a first docking head 3212 and a second docking head 3213. The first docking head 3212 and the second docking head 3213 are connected to each other through the receiving panel 3211.

Particularly, the receiving panel 3211 includes a ring panel in curved shape, and a size of the ring panel is the same as that of the solar panel 311, and an inner curved side of the ring panel is provided with a plurality of locking protruding elements 32111 perpendicular to the ring panel of the receiving panel 3211. Each locking protruding element of the locking protruding elements 32111 is pointed to a center of the ring panel. A locking screw hole B is provided on the locking protruding element 32111 along a direction parallel to the locking protruding element 32111 for a screw to pass through to be fixed on the lamppost core pole 1. A receiving screw hole C perpendicular to the locking protruding element 32111 is provided on the locking protruding element 32111 for a screw to pass through to fix the positioning unit 33. Particularly, two locking protruding elements 32111 are used in this embodiment. A plurality of positioning sleeve poles 32112 parallel to the ring panel of the receiving panel 3211 are provided on the receiving panel 3211. A hollow receiving perforation D is provided on each positioning sleeve pole of the plurality of positioning sleeve poles 32112, and a direction of the hollow receiving perforation D is parallel to the direction of the positioning sleeve pole 32112 itself. The receiving perforation D is configured for the posts 3131 of the connector 313 to pass through, thus fixing the solar sleeve 31. Particularly, the number and positions of positioning sleeve post of the plurality of positioning sleeve posts 32112 corresponds to the plurality of posts 3131. Since a main source of a supporting force of the docking piece 321 is a friction force generated after a plurality of screws are screwed into the plurality of locking protruding elements 32111 and pressed against a surface of the lamppost core pole 1, each two positioning sleeve poles 32112 are symmetrically provided on both sides of the locking protruding element 32111 to ensure uniform distribution of the force. The positioning sleeve pole 32112 is provided near the locking protruding element 32111, this is because the locking protruding element 32111 acts as a fulcrum and a force supply at the same time. The positioning sleeve pole 32112 and the locking protruding element 32111 are equivalent to a lever. The closer the positioning sleeve pole 32112 is to the docking piece 321, the higher the structural strength of the docking piece 321.

The first docking head 3212 includes an I-shaped projection, a horizontal long side of the first docking head 3212is perpendicularly connected to an end of one side of the receiving panel 3211, a horizontal short side together with a vertical side of the first docking head 3212 forms a suspended T-shaped projection. The second docking head 3213 includes a half square frame projection, and the half square frame projection uses the ring panel of the receiving panel 3211 as a base panel, with a T-shaped slot that may be fitted with the first docking head 3212. A receiving screw hole A is provided on the vertical side of the I-shaped projection of the first docking head 3212 and an outer edge of the second docking head 3213 (that is, the base panel). The T-shaped projection and the T-shaped slot make the two docking pieces 321 may be clamped together with a horizontal part of a head part of the T-shape and thus fitted tightly when the two docking pieces 321 are docked with each other. A screw further screwed in the receiving screw hole A may further increase a docking strength of the two docking pieces 321.

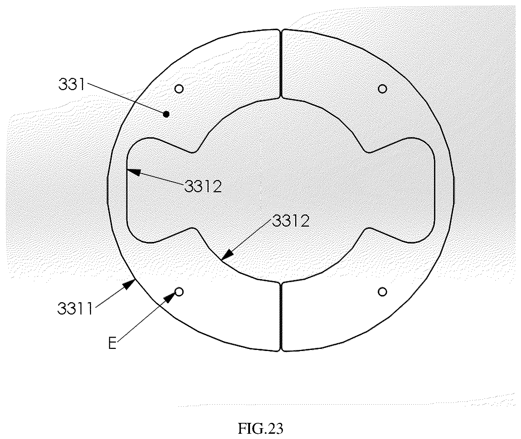

Please refer to FIG.23. The positioning unit 33 includes at least two positioning pieces 331. Each positioning piece of the positioning pieces 331 is provided with an outer positioning edge 3311 and an inner positioning edge 3312. The outer positioning edge 3311 has a circular shape, and a size of which is the same as that of the connecting unit 32.

A part of the inner positioning edge 3312 is acirculararc part parallel to and concentric with the outer positioning edge 3311. The part of the inner positioning edge 3312 is pressed against and attached to the lamppost core pole 1 when assembling, thus limiting a plane where the positioning piece 331 is located is parallel to a cross-section of the lamppost core pole 1 and forming a shape position limiting. Another part of the inner positioning edge 3312 is bent towards the outer positioning edge 3311, forming a hollowed region that does not contact the lamppost core pole 1, which may provide a channel for internal drainage and wiring,thus allowing rainwater etc. that infiltrated an interior to flow down along the surface of the lamppost core pole 1. A positioning screw hole E is further provided on the positioning piece 331. The positioning screw hole E corresponds to the locking screw hole B of the docking piece 321. The positioning unit 33 is fixed on the connecting unit 32 after a screw is screwed into the positioning screw hole E. Particularly, in this embodiment, two positioning pieces 331 are used. It may be understood for those skilled in the art that, a shape and a size of the positioning piece 331 may be modified to be matched with a shape and a size of the lamppost core pole 1. When it is applied to the lamppost core pole 1 with different sizes, area occupied by the positioning piece 331 is also required to be adaptively modified without modifications of other assemblies. Specifically, the shape of the lamppost core pole 1 may be a square shape, and at this time the shape of the positioning piece 331 is adaptively modified. Particularly, a positioning function of the positioning unit 33 is achieved through a mutual restriction and locking of the shape positioning between the positioning unit 33 and the lamppost core pole 1, a direct connection between the positioning unit 33 and the connecting unit 32 through the screw, and a press-against positioning between the connecting unit 32 and the lamppost core pole 1 through the screw. It is envisioned that, the smaller the size of the lamppost core pole 1 is, the smaller a radius of the circular arc part of the inner positioning edge 3312 of the positioning piece 331 needs to be, to ensure that it is suitable for the lamppost core pole 1 with different sizes while an outline of the outer positioning edge 3311 of the positioning piece 331 unchanged. That is, it is suitable to the lamppost core pole 1 with different sizes without changing assemblies such as the solar sleeve 31 and the connecting unit 32.

It can be envisioned for those skilled in the art that, because of using of the connecting unit 32, the solar holding panel of the present application is detachable, and detachment does not affect its functionality, allowing it to operate normally upon reinstallation. Therefore, it may be quickly installed, which also means it may be quickly disassembled and replaced. This is not a separated effect but rather a foreseeable associated effect.

Take one solar sleeve 31 for an example, an installation process of the solar holding panel of the present application is detailed described as follows.

First, two docking pieces 321 of a first connecting unit 32 is fitted and docked with each other at a bottom position. Screws are screwed into four locking screw holes B to prevent the first connecting unit 32 from falling off, finishing a pre-fixing. However, the screws are not completely tightened to prevent the first connecting unit 32 from inclining.

Then, two positioning pieces 331 of a first positioning unit 33 are installed on a bottom of the two docking pieces 321 of the first connecting unit 32, and a screw is screwed into the positioning screw hole E. At this time, the screws in the locking screw holes B of the first connecting unit 32 are tightened. The first connecting unit 32 may be kept parallel to the cross-section of the lamppost core pole 1 under a shape position limiting of the first positioning unit 33.

At this time, a bottom of the solar sleeve 31 is inserted into the two docking pieces 321 of the first connecting unit 32, respectively.

Immediately afterwards, a top of the solar sleeve 31 is inserted into two docking pieces 321 of a second connecting unit 32. At the same time the two docking pieces 321 of the second connecting unit 32 are fitted with each other. Screws are screwed into four locking screw holes B.

Finally, two positioning pieces 331 of a second positioning unit 33 are installed on a top of the two docking pieces 321 of the second connecting unit 32. A screw is screwed into the positioning screw hole E to secure them. At this time, the screws in the locking screw holes B of the second connecting unit 32 are tightened. The second connecting unit 32 may be kept parallel to the cross-section of the lamppost core pole 1 under a shape position limiting of the second positioning unit 33.

Furthermore, after the solar sleeve 31 is inserted into the connecting unit 32, since an upper end and a lower end of the connecting unit 32 are totally the same, the connecting unit 32may also connected to the connector 313 of another solar sleeve 31 after the lower end thereof is connected to the connector 313 of one solar sleeve 31. Therefore, a rapid connection of two solar sleeves 31 is achieved. Repeat this operation, and a plurality of solar sleeves 31 may be continuously connected through a superposition of using of the connecting unit 32, and adjacent two solar sleeves 31 are connected through one connecting unit 32.

Take two solar sleeves 31 for an example, an installation process of the solar holding panel of the present application is detailed described as follows.

First, the two docking pieces 321 of the first connecting unit 32 are fitted and docked on the bottom position. Screws are screwed into the four locking screw holes B to prevent the first connecting unit 32 from falling off, finishing the pre-fixing. However, the screws are not totally tightened to prevent the first connecting unit 32 from inclining.

Then, the two positioning pieces 331 of the first positioning unit 33 are installed on the bottom of the two docking pieces 321 of the first connecting unit 32, and the screw is screwed into the positioning screw hole E to secure. At this time, the screws in the locking screw holes B of the first connecting unit 32 are tightened. The first connecting unit 32 may be kept parallel to the cross-section of the lamppost core pole 1 under the shape position limiting of the first positioning unit 33.

At this time, a bottom of a first solar sleeve 31 is inserted into the two docking pieces 321 of the first connecting unit 32, respectively.

Then, the top of the first solar sleeve 31 is inserted into the two docking pieces 321 of the second connecting unit 32. At the same time the two docking pieces 321 of the second connecting unit 32 are fitted with each other. Screws are screwed into the four locking screw holes B and tightened.

After that, a bottom of a second solar sleeve 31 is inserted into the two docking pieces 321 of the second connecting unit 32, respectively.

Immediately afterwards, two docking pieces 321 of a third connecting unit 32 are inserted into a top of the second solar sleeve 31, respectively. At the same time, the two docking pieces 321 of the third connecting unit 32 are fitted with each other. Screws are screwed into four locking screw holes B.

Finally, the two positioning pieces of the second positioning unit 33 are installed on a top of the two docking pieces 321 of the third connecting unit 32. A screwis screwed into the positioning screw hole E. At this time, the screws in the locking screw holes B of the third connecting unit 32 are tightened. The third connecting unit 32 may be kept parallel to the cross-section of the lamppost core pole 1 under the shape position limiting of the second positioning unit 33.

In another embodiment, the first side panel includes the solar panel 311, the supporting element 312, and the connector 313. The second side panel only includes a supporting element 312 and a connector 313, and does not include the solar panel 311 that provided in the first side panel. A total angle of a sunlight exposure on a solar holding panel in a process of the sun rises in the east and sets in the west is approximately within 270°, and not all surfaces are illuminated. However, the intensity of sunlight before 9 am and after 4 pm is usually not enough to generate solar power. During this period, an actual effective total angle of sunlight exposure on the holding panel is approximately within 180°. Therefore, theoretically, as long as the first side panel can convert solar energy, a maximum energy utilization may be achieved. But this requires that the first side panel must face a direction of the sunlight. To solve this problem, a color of the first side panel may be distinguished from a color of the second side panel. An installation worker install at about noon, just put a center of the first panel directly face the sun, which will not increase a difficulty of installation and cause higher costs. In addition, it is optional that installing at about 8 am and put a left edge (that is, a position of a left gap) of the first side panel directly face the sun. If installation is chosen at around 5 pm, then put a right edge (that is, a position of a right gap) directly face the sun. It may be understood that, "first" and "second" are only configured to distinguish the first side panel and the second side panel, and there is no limitation to a structural importance or an installation sequence, the two are completely interchangeable.

It may be understood for those skilled in the art that, in the present application, structures of the first side panel and the second side panel of the solar sleeve 31 are exactly the same except that materials are variable. Structures of the two docking pieces 321 of the connecting unit 32 are completely the same. Structures of the two positioning pieces of the positioning unit 33 are completely the same. Therefore, when above-mentioned assemblies are assembled and docked, it is not necessary to limit and distinguish which assembly corresponds to another assembly. Assemblies with same structures are completely interchangeable.

An application of the solar holding panel of the present application achieves cleaning-free through a vertical installation of the solar sleeve, achieves a rapid installation through connecting the solar sleeve with connecting unit, and ensures accuracy and stability of the rapid installation through a cooperation with the positioning unit, achieving low cost and high yield.

The above-mentioned embodiments only express several implementation modes of the present application, and the description is relatively specific and detailed, but should not be understood as limiting the scope of the present application. It should be noted that, for those of skill in the art, several variations and improvements may be made without departing from the concept of the present application, then the present application intends to include these modifications and variations.

## Claims

1. A solar holding panel, comprising:
at least one solar sleeve sleeved on a lamppost core pole of a street lamp;
at least two connecting units, wherein the two connecting units are provided on an upper end and a lower end of the solar sleeve to fix the solar sleeve on the lamppost core pole.

2. The solar holding panel of claim 1, wherein, the solar sleeve includes at least two side panels in curve shape, edges of each side panel of the two side panels are fitted with each other, the side panel includes one supporting element, the supporting element supports a rigidity of the side panel, at least one side panel includes one solar panel, the solar panel converts solar energy into electricity to provide electricity to the street lamp.

3. The solar holding panel of claim 2, wherein, two connectors are provided on upper and lower ends of the side panel, each connector of the two connectors includes anedge panel in curved shape and a base panel provided perpendicularly to the edge panel, a plurality of posts perpendicular to the base panel are provided on the base panel;
each connecting unit of the at least two connecting units includes at least two docking pieces, each docking piece of the two docking pieces includes one receiving panel in curved shape, a plurality of semi-enclosedpositioning sleeve poles are provided on an inner side surface of the receiving panel in curved shape, a receiving panel of one docking piece is connected to panel of one connector, the plurality of positioning sleeve poles of the receiving panel are sleeved and fixed on the plurality of posts of the connector correspondingly.

4. The solar holding panel of claim 3, wherein, the docking piece further includes a first docking head and a second docking head provided on both ends of the receiving panel, one projection structure is provided on the first docking head, one slot structure matched and clamped with the projection structure of the first docking head is provided on the second docking head; a plurality of locking protruding elements along a radius direction of a curved shape is provided on an inner side of the receiving panel, a locking screw hole is provided on the inner side of each locking protruding element of the plurality of locking protruding element parallel to a direction of the plurality of locking protruding elements, a screw passes through the locking screw hole to fix the docking piece on the lamppost core pole.

5. The solar holding panel of claim 4, further comprising a positioning unit, wherein the positioning unit includes at least two positioning pieces, each positioning piece of the two positioning pieces includes at least two positioning screw holes;
a receiving screw hole perpendicular to the locking protruding element is further provided on the locking protruding element of the receiving panel, a position and the number of the receiving screw hole correspond to the at least two positioning screw holes, a screw passes through the receiving screw hole and each positioning screw hole of the at least two positioning screw holes to fix the positioning piece on the receiving panel.

6. The solar holding panel of claim 5, comprising one solar sleeve, two connecting units and two positioning units, wherein, the solar sleeve is connected to a receiving perforation of a first connecting unit through a post on a bottom, the solar sleeve is connected to a receiving perforation of a second connecting unit through a post on a top; the first connecting unit is fixedly connected to one positioning unit of the two positioning units, the second connecting unit is fixedly connected to the other positioning unit of the two positioning unit.

7. The solar holding panel of claim 5, comprising two solar sleeves, three connecting units and two positioning units, a first solar sleeve is connected to a receiving perforation of a first connecting unit through a post on a bottom, the first solar sleeve is connected to a receiving perforation of a second connecting unit through a post on a top; a second solar sleeve is connected to the receiving perforation of the second connecting unit through a post on a bottom, the second solar sleeve is connected to a receiving perforation of a third connecting unit through a post on a top; the firstconnecting unit is fixedly connected to one positioning unit of the two positioning units, the third connecting unit is fixedly connected to the other positioning unit of the two positioning units.

8. The solar holding panel of claim 6 or 7, wherein, the supporting element includes a supporting panel in curved shape, and a first clamping element and a second clamping element provided on both sides of the supporting panel;
the first clamping element includes:
a first clamp connecting edge, an end position of which near to one end of an inner curved side of the supporting panel is perpendicularly connected to an edge of one side of the supporting panel;
a first clamp inner edge perpendicularly connected to an end position of the first clamp connecting edge near to one end of the inner curved side of the supporting panel and slightly protruding from the supporting panel along a direction of the inner curved side;
a first clamp outer edge perpendicularly connected to an end position of the first clamp connecting edge near to one end of an outer curved side;
a first clamp bending angle, wherein the first clamp bending angle is a right angle, an internal angle direction of the first clamp bending anglefaces the outer curved side of the supporting panel, the first clamp bending angle is concaved along a direction of the inner curved side on a connection position of the first clamp outer edge and the first clamp connecting edge;
the second clamping element includes:
a second clamp connecting edge, an end position of which near to one end of the inner curved side of the supporting panel is perpendicularly connected to an edge of another side of the supporting panel;
a second clamp inner edge perpendicularly connected to an end position of the second clamp connecting edge near to the end of the inner curved side of the supporting panel and slightly protruding from the supporting panel along the direction of the inner curved side;
a second clamp outer edge perpendicularly connected to the end position of the second clamp connecting edge near to one end of the outer curved side;
a second clamp bending angle, wherein the second clamp bending angle is a right angle, an internal angle direction of the second clamp bending anglefaces the outer curved side of the supporting panel, and an additionally protruding structure is provided on a connection position of the second clamp outer edge and the second clamp connecting edge.

9. The solar holding panel of claim 8, wherein, each side panel further includes a first sealing strip and a second sealing strip provided on both sides; the first sealing strip and the second sealing strip clamp the connector on an upper end and the lower end of the supporting element through a locking tooth slot formed by the edge panel where the thickness of both ends of the edge panel is thinner than that of a middle part of the edge panel;
the first sealing strip includes
a first sealing connecting edge, wherein the first sealing connecting edge is a smooth straight edge;
a first sealing inner edge, wherein the first sealing inner edge is a straight edge provided with a locking tooth, an end of one side of the first sealing inner edge is perpendicularly connected to an end of one side of the first sealing connecting edge, an end of the other side of the first sealing inner edge is provided with the locking tooth clamped with the first clamp inner edge;
a first sealing outer edge, wherein the first sealing outer edge is a small angle bending edge, an end of one side of the first sealing outer edge is perpendicularly connected to an end of the other side of the first sealing connecting edge, an end of the other side of the first sealing outer edge is provided with a locking tooth clamped with the locking tooth slot, a bending with small angle is provided on a middle portion of the first sealing outer edge, a locking tooth clamped with the first clamp bending angle is provided on the bending;
a first sealing bending angle, wherein the first sealing bending angle is a right angle, an internal angle direction of the first sealing bending angle faces the first sealing inner edge, and the first sealing bending angle protrudes along an opposite direction of the first sealing outer edge atone end where the first sealing connecting edge is connected to the first sealing outer edge,
the second sealing strip includes
a second sealing connecting edge, the second sealing connecting edge is a smooth straight edge;
a second sealing inner edge, the second sealing inner edge is a straight edge provided with a locking tooth, an end of one side of the second sealing inner edge is perpendicularly connected to an end of one side of the second sealing connecting edge, and an end of the other side of the second sealing inner edge is provided with the locking tooth;
a second sealing outer edge, wherein the second sealing outer edge is a small angle bending edge, an end of one side of the second sealing outer edge is perpendicularly connected to an end of the other side of the second sealing connecting edge, an end of the other side of the second sealing outer edge is provided with a locking tooth clamped with the locking tooth slot, a bending with small angle is provided on a middle portion of the second sealing outer edge, a locking tooth clamped with the second clamp bending angle is also provided on the bending;
a second sealing bending angle, wherein the second sealing bending angle is a right angle, an internal angle direction of the second sealing bending angle is away from the second inner edge, the second sealing bending angle is concaved along a direction of the second sealing outer edge atone end where the second sealing connecting edge is connected to the second sealing outer edge, and forms an offset sealing strip with the first sealing bending angle.

10. A solar street lamp, comprising a lamppost core pole, a lamp, the solar holding panel of any one of claims 1 to 7 or 9 and a base, wherein, the lamp is installed on the lamppost core pole, the solar holding panel is sleeved on the lamppost core pole, the lamppost core pole is fixed through the base.
